# EUROPÄISCHE PATENTSCHRIFT

(11) **EP 4 219 276 B1**
(45) Veröffentlichungstag und Bekanntmachung des Hinweises auf die Patenterteilung: **25.02.2026**
(21) Anmeldenummer: 22197815.8
(22) Anmeldetag: 26.09.2022
(51) Int. Cl.: B62D 33/06

(54) **KABINENLAGERUNGSSYSTEM UND KABINENLAGERUNG**
CABIN MOUNTING SYSTEM AND CABIN MOUNT
SYSTÈME DE MONTAGE DE CABINE ET MONTAGE DE CABINE

(30) Priorität: 31.01.2022 DE 102022102180
(43) Veröffentlichungstag der Anmeldung: 02.08.2023
(73) Patentinhaber: Deere & Company, Moline, IL 61265 (US)
(72) Erfinder: Hingne, Abhijit, Mannheim (DE); Flebbe, Thiemo, Mannheim (DE)
(74) Vertreter: Dehnhardt, Florian Christopher

(56) Entgegenhaltungen:
- EP-A2- 2 650 195
- DE-A1- 19 961 670

## Beschreibung

Die vorliegende Erfindung betrifft ein Kabinenlagerungssystem und eine Kabinenlagerung für Fahrzeuge, welche die Befestigung der Kabine eines Fahrzeugs auf oder an dem Chassis ermöglichen. Dokument EP2650195 A2 zeigt den Oberbegriff des unabhängigen Anspruchs.

Fahrzeuge, speziell für den Offroadbereich, werden in anspruchsvollen Arbeitsumgebungen eingesetzt. Bei den Fahrzeugen kann es sich dabei um Baufahrzeuge, z.B. Raupenfahrzeuge, Fahrzeuge für Erdaushub, Forstfahrzeuge zum Verarbeiten von Nutzholz oder um landwirtschaftliche Fahrzeuge handeln.

Der Einsatzort ist meist unerschlossenes Gelände mit vorhandenen Steigungen. Gerade bei vorhandenem Gefälle und dem Einsatz auf Erdboden oder Geröll kann es zu einer starken Neigung des Fahrzeugs kommen, mit einem verbundenen Kippen oder Überschlagen des Fahrzeugs im Schadensfall. In dieser Situation ist die Bedienperson bestmöglich vor Verletzungen zu schützen, zum einem vor möglichen Kollisionen innerhalb der Kabine, zum anderen vor einem Herausschleudern aus der Kabine heraus. Zusätzlich ist es erforderlich, die Kabine derart am Fahrzeug zu halten, dass ein Losbrechen der Kabine bei einem Kippen des Fahrzeugs verhindert wird und eine Sicherheitszelle für die Bedienperson auch bei einem Überschlag des Fahrzeugs erhalten bleibt.

Aufgrund des Fahrzeugeinsatzes im freien Gelände und der damit verbundenen Arbeitsumgebung bleibt Schmutzeintrag am und im Fahrzeug nicht aus. Dadurch kommt es zu Verschmutzungen unterhalb der Fahrzeugkabine, so dass besonders bei beweglich gelagerten Kabinen der Federweg beeinträchtig werden kann. Zusätzlich kann der Schmutzeintrag zu Geräuschentwicklung führen, da vorhandene Spalten zwischen beweglichen Bauteilen der Kabinenlagerung mit Schmutzpartikeln verfüllt werden können. Es ist die Aufgabe der Erfindung, die angesprochenen Probleme zu vermeiden. Die Aufgabe wird gelöst durch die Erfindung gemäß dem Hauptanspruch. Weitere Ausbildungen der Erfindung ergeben sich aus den abhängigen Ansprüchen.

Die Erfindung betrifft eine Kabinenlagerung aufweisend eine Chassishalterung, aufweisend eine Chassisplatte, ausgelegt zum Befestigen an ein Fahrzeugchassis, eine an der Chassisplatte befestigte untere Lagerplatte mit einer Öffnung, ausgelegt zum Verbinden mit einer oberen Lagerplatte, eine Kabinenhalterung aufweisend eine Kabinenplatte, ausgelegt zum Befestigen an einer Fahrzeugkabine, eine an der Kabinenplatte befestigte obere Lagerplatte mit einer U-förmigen Struktur, ausgelegt um in der Öffnung der unteren Lagerplatte beweglich gehalten zu werden, so dass die Chassishalterung und die Kabinenhalterung relativ zueinander bewegbar sind, wobei ein Formelement an der unteren Lagerplatte und/oder der Chassisplatte angebracht ist, so dass auftreffender Schmutz am Formelement abgestreift wird.

Das Formelement sorgt für eine verkleinerte Oberfläche, besonders im Bereich der unteren Lagerplatte. Üblicherweise wird die untere Lagerplatte mit der Chassisplatte verschweißt oder verschraubt, so dass zwischen beiden ein 90 Grad-Winkel oder ein spitzer Winkel ausgebildet ist. Gerade an diesem Übergang und dem anschließendem Oberflächenbereich der Chassis- und unteren Lagerplatte kommt es zu einer verstärkten Schmutzansammlung. Durch das Formelement wird diese Oberfläche verkleinert und der Winkelbereich zwischen beiden Platten wird durch das Formelement überdeckt. Somit ist der Schmutzaufbau verhindert und die Funktion der Kabinenlagerung kann mit verringertem Wartungsaufwand umgesetzt werden.

Bei einer Weiterbildung kann das Formelement aus Metall oder Kunststoff bestehen.

Bei einer Anfertigung aus Kunststoff ist eine höhere Flexibilität oder Verformbarkeit des Formelements gewährleistet. Das Formelement kann hierbei an die Chassishalterung mittels Kleben, Verschrauben, Verkeilen, Verklemmen oder Kunststoffschweißen befestigt sein. Bei einer Anfertigung aus Metall kann das Formelement eine erhöhte Haltbarkeit oder Lebensdauer aufweisen. Das Formelement kann in diesem Fall durch Schweißen an der Chassishalterung angebracht werden.

In einer Ausführung kann das Formelement auf einer Seite der unteren Lagerplatte vorgesehen sein.

Die untere Lagerplatte ist im eingebauten Zustand vertikal orientiert, so dass die Seitenflächen in eine horizontale Richtung zeigen. Das Formelement kann an einer Seitenfläche anliegen. Dies kann vorteilhaft auf der Seite vorgesehen sein, die eine starke Schmutzansammlung im Betrieb des Fahrzeugs aufweist, und kann nach in eine Außenrichtung des Fahrzeugs oder in eine Fahrtrichtung orientiert sein.

Bei einer Ausbildung kann das Formelement auf beiden Seiten der unteren Lagerplatte vorgesehen sein.

Die beidseitige Anordnung stellt die umfassende Vermeidung des Aufbaus einer Schmutzschicht sicher. Es können alle Fahrsituation hiermit abgedeckt werden und die Funktion der Kabinenlagerung erfährt einen breiteren Schutz.

In einer Weiterbildung kann zwischen der Kabinenplatte und der Chassisplatte ein hydraulischer Aktuator vorgesehen sein.

Der Aktuator stellt sicher, dass die Lagerung der Kabine aktiv angesteuert werden kann. So können von einer Fahrzeugsensorik erfasste Bewegungen dazu verwendet werden, die Auswirkungen auf die Kabine zu verringern. Weiterhin stellt der Aktuator sicher, dass eine Dämpfung erfolgen kann.

Bei einer Ausbildung kann an der unteren Lagerplatte ein Positionssensor vorgesehen sein, der mit einem Gestänge zur Führung der oberen und unter Lagerplatte zusammenwirkt.

Durch den Positionssensor, der mit dem Gestänge zusammenwirkt, das eine Lagerung zwischen der unteren und der oberen Lagerplatte darstellt, kann der vertikale Abstand zwischen der oberen und der unteren Lagerplatte erfasst werden. Der Positionssensor kann dabei ein Winkelsensor oder ein Abstandssensor sein, solange ein Abstand aus den Messdaten errechnet werden kann. Mit Hilfe des errechneten Abstands kann eine aktive Kabinenfederung realisiert werden. Diese steuert aktiv vorhandene Hydraulikaktuatoren an, so dass eine Regelung erfolgt. Weiterhin kann ein sicherheitsrelevanter Zustand erfasst werden, so dass auch in diesem Fall die Hydraulikaktuatoren aktiv in eine gesonderte Position gefahren werden können, die eine größtmögliche Sicherheit für die Bedienperson gewährleistet.

Die Erfindung betrifft weiterhin ein Kabinenlagerungssystem aufweisend wenigstens zwei der voran angeführten Kabinenlagerungen, wobei zwischen der Kabinenplatte einer Kabinenlagerung und der unteren Lagerplatte der weiteren Kabinenlagerung ein Panhardstab beweglich gehalten ist.

Die Erfindung und Weiterbildungen werden anhand der Figuren erläutert. Dabei zeigt
Figur 1 eine Detailansicht einer Ausführung;
Figur 2 eine Ausführung in einem eingebauten Zustand in einem Fahrzeug;
Figur 3 eine weitere Ausführung in eingebautem Zustand;
Figur 4 eine Ausführung an einem Achsenmodul eines Fahrzeugs.

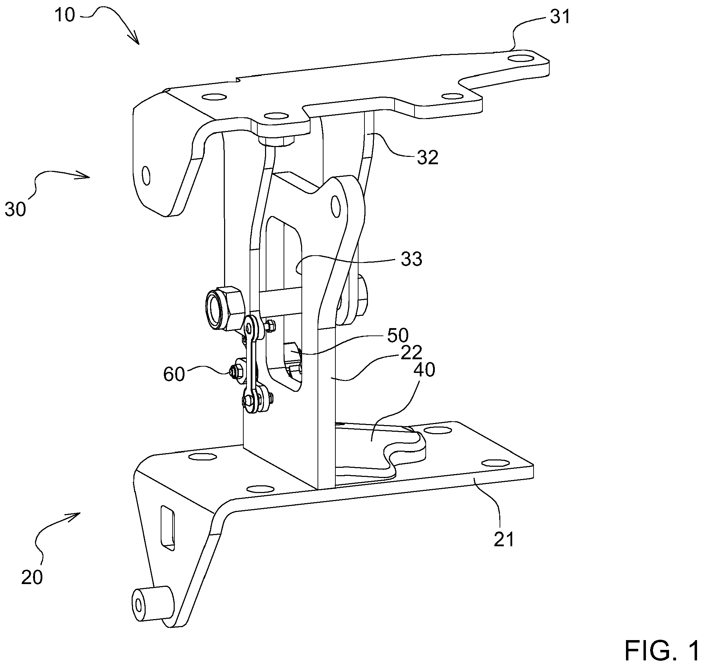

In Fig. 1 ist die Kabinenlagerung 10 in einer isometrischen Ansicht dargestellt. Die Kabinenlagerung 10 weist dabei eine zweiteilige Form auf. Der untere Teil stellt dabei die Chassishalterung 20 dar, der obere Teil die Kabinenhalterung 30. Die Chassishalterung 20 beinhaltet eine Chassisplatte 21, die dazu vorgesehen ist, auf einem Teil des Fahrzeugs, bevorzugt ein Bestandteil des Chassis befestigt zu werden, mittels Verschraubung oder Verschweißung. Eine untere Lagerplatte 22 ist fest mit der Chassisplatte 21 verbunden, derart, dass diese sich vorwiegend senkrecht zur Chassisplatte 21 erstreckt und in einem mittleren Bereich der Chassisplatte 21 angebracht ist. Die Verbindung kann durch Schweißen, Schrauben, Nieten sichergestellt sein. Die untere Lagerplatte 22 weist in ihrer Mitte, eine Öffnung 33 oder Ausnehmung auf, die dazu dient, einen Teil der oberen Lagerplatte 32 aufzunehmen. Die Öffnung 33 kann dabei gefräst, gebohrt oder gestanzt sein.

Die Kabinenhalterung 30 weist eine Kabinenplatte 31 auf, die dazu ausgebildet ist, an einem Bestandteil der Kabine angebracht zu werden. Hierzu kann die Kabinenplatte 31 Bohrungen für Schrauben aufweisen, jedoch kann diese auch alternativ verschweißt werden. An der Kabinenplatte 31 ist eine obere Lagerplatte 32 in einem mittleren Bereich der Kabinenplatte 31 vorwiegend senkrecht fest verbunden. Die obere Lageplatte 32 weist hierzu zwei zueinander parallele Stege auf, die in einem festen Abstand an der Kabinenplatte 31 befestigt sind und zwei freie Enden aufweisen. In einem Endbereich der oberen Lagerplatte 32 sind die freien Enden durch einen Bolzen, eine Schraube oder einen Metallstab miteinander verbunden. Dabei sitzt der Bolzen gleichzeitig innerhalb der Öffnung 33 der unteren Lagerplatte 22 und sichert eine bewegliche Verbindung der unteren 22 mit der oberen Lagerplatte 32, somit auch der Chassishalterung 20 mit der Kabinenhalterung 30. Durch die geometrische Höhe und Breite der Öffnung 33 ist die relative Beweglichkeit der Kabinenhalterung 30 und der Chassishalterung 20 festgelegt.

An einem Übergang der unteren Lagerplatte 22 und der Chassisplatte 21 ist ein Formelement 40 angebracht. Dabei kann das Formelement 40 gleichzeitig an beiden Platten befestigt sein, oder nur an einer von beiden. Das Formelement 40 kann aus Kunststoff oder Metall beschaffen sein. Es kann in eine oder beide Platten mittels eines Schnappmechanismus befestigt sein, verschraubt oder verschweißt sein. Das Formelement 40 weist eine zu einem freien Ende der Chassisplatte 21 hin, abfallende Form auf. In der Einbaulage am Fahrzeug weist die abfallende Form in Richtung der Schwerkraft. Die Gestalt bewirkt, dass anfallender Schmutz durch die Wirkung der Schwerkraft von der unteren Lagerplatte 22 weg geleitet wird und es an dieser nicht zu einer Schmutzansammlung kommt. Dadurch kann die Ansammlung von Schmutzpartikeln verhindert werden und die Beeinträchtigung der Beweglichkeit von unterer 22 und oberer Lagerplatte 32 wird sichergestellt. Das Formelement 40 kann dabei zur horizontalen Ebene in der Einbaulage einen Winkel von 10 bis 80 Grad einschließen. Zusammen mit der Einwirkung von Wasser, etwa durch Regen oder durch aktives Reinigen des Fahrzeugs kann darüber hinaus die Entfernung von Schmutzpartikeln an der Übergangsstelle vereinfacht werden, wodurch der Wartungsaufwand verringert wird.

Die Chassis- und die Kabinenhalterung 20, 30 sind zusätzlich durch das Gestänge 60 beweglich miteinander verbunden. Das Gestänge 60 dient primär der Erfassung des Abstands der Chassis- und der Kabinenhalterung 20, 30 zueinander. Hierfür ist an der unteren Lagerplatte 22 ein Positionssensor 50 in Form eines Winkelsensors angebracht, der den Winkel der Auslenkung des Gestänges 60 erfasst. Durch eine elektrische Signalausgabe des Sensors 50 mit einer möglichen Berechnung mit Hilfe eines Steuergerätes kann der Abstand berechnet oder direkt gemessen werden. Der Abstand kann für die Steuerung eine aktiven Kabinendämpfung verwendet werden.

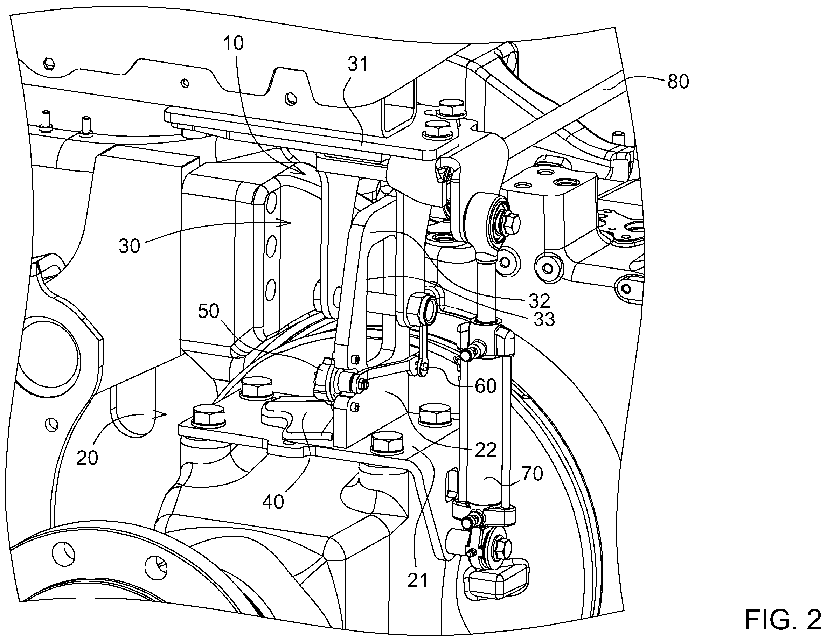

Fig. 2 zeigt die Kabinenlagerung 10 in einer Einbaulage im Fahrzeug. Mit der Chassishalterung 20 und der Chassisplatte 21 ist die Kabinenlagerung 10 an einem Chassisbereich des Fahrzeugs angebracht. Dies kann mittels Schrauben, Nieten, Verschweißen oder dergleichen erfolgen. Mit der Kabinenhalterung 30 und der Kabinenplatte 31 ist die Kabinenlagerung 10 an einer Unterseite der Kabine befestigt. Die Verbindung kann gleichfalls per Verschraubung, Nieten, Verschweißen hergestellt sein. An einer Seite der Kabinenlagerung 10 ist ein hydraulischer Aktuator 70 angebracht. Dieser dient der aktiven Verstellung der Kabinenlagerung 10, so dass der Abstand zwischen der Kabinen- und der Chassishalterung 20, 30 eingestellt werden kann, oder eine aktive Dämpfung der Kabine ermöglicht ist. Der hydraulische Aktor ist an der Chassishalterung 20 und an der Kabinenhalterung 30 befestigt.

In der Anwendung bewegt sich die Kabine unterschiedlich zum Fahrzeugchassis. Diese Bewegung resultiert in einer relativen Bewegung der oberen 32 und unteren Lagerplatte 22. Mittels des Gestänges 60 und des Positionssensors 50 kann die Bewegung der Lagerplatten erfasst werden und daraus eine aktive Ansteuerung des hydraulischen Aktuators 70 erfolgen.

Die beiden Lagerplatten sind miteinander durch einen Steg verbunden, der zwischen beiden Enden der oberen Lagerplatte 32 angebracht ist. Es ist ebenfalls möglich, dass nur die untere Lagerplatte 22 zwei freie Enden aufweist. Im Falle eines Fahrzeugüberschlages oder einer starken Krafteinwirkung auf die Kabine, erhalten die Lagerplatten weiterhin die Verbindung der Kabine mit dem Fahrzeug, so dass ein Überrollen oder Loslösen ausgeschlossen wird.

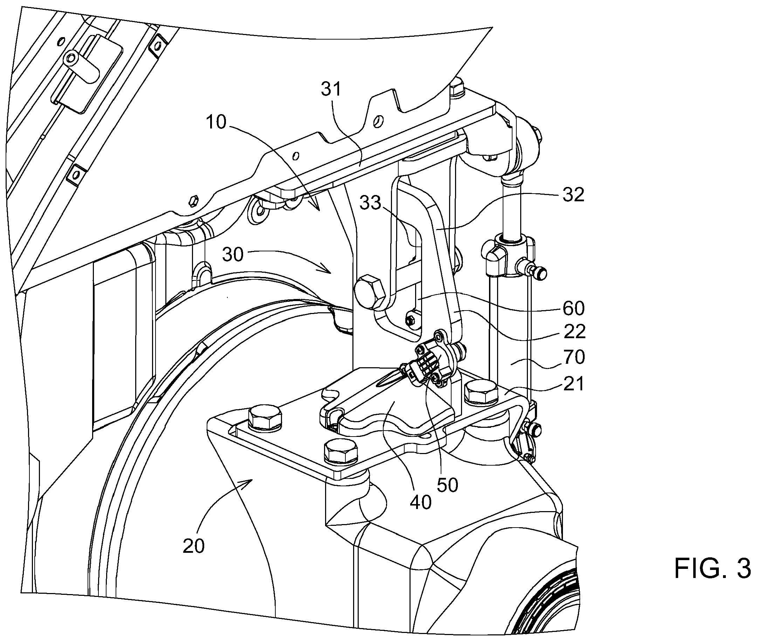

Fig. 3 zeigt eine weitere Ansicht der Kabinenlagerung 10. Das Formelement 40 ist auf einer Seite der unteren Lagerplatte 22 sichtbar angebracht. Die Höhe des Formelements 40 kann variabel festgelegt werden, wodurch sich der Winkel, der zwischen der Oberseite des Formelements 40 und der Horizontalen in der Einbaulage verändern kann. Das Formelement 40 ist mit einer Schraubverbindung an der Chassisplatte 21 und mit einer weiteren Verschraubung an der unteren Lagerplatte 22 befestigt. Die Verbindung kann auch durch einen Schnappmechanismus erfolgen. Falls das Formelement 40 aus Metall besteht, kann auch eine Schweißverbindung vorgesehen sein.

Der Positionssensor 50, der an der unteren Lagerplatte 22 angebracht ist, ist mit einer Steuerung verbunden, die hier nicht gezeigt ist. Mittels der Steuerung kann das Bewegungsverhalten der Kabine erfasst und berechnet werden, so dass eine aktive Ansteuerung des Hydraulikaktuators 70 erfolgen kann. Der Sensor 50 kann an der unteren Lagerplatte 22 angebracht sein. Falls die Einbausituation es erlaubt, kann dieser auch an der oberen Lagerplatte 32 vorgesehen sein. Der Sensor 50 kann auch ein linearer Positionssensor sein. Alternativ kann der Hydraulikaktuator 70 über eine Positionsmessung verfügen, so dass ein zusätzlicher Positionssensor 50 entfallen kann.

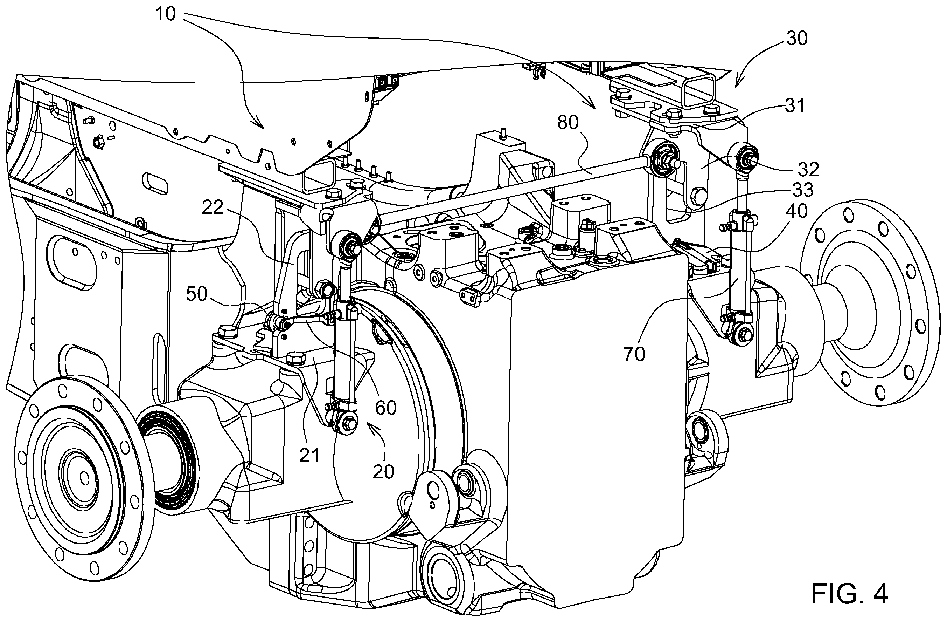

Figur 4 zeigt die Kabinenlagerung 10, die an einem Abschnitt des Achsgehäuses eines Fahrzeugs befestigt ist. Zusätzlich zu den voran beschriebenen Ausführungen weist die Kabinenlagerung 10 einen Panhardstab 80 auf, der eine Baugruppe der Kabinenlagerung 10 mit einer weiteren auf der anderen Kabinenseite verbindet. Der Panhardstab 80 sorgt für die Begrenzung der Freiheitsgrade und verhindert ein seitliches Ausweichen der Kabinenkonstruktion, die an der Kabinenplatte 31 befestigt ist. Hierdurch kann die erfindungsgemäße Kabinenlagerung 10 als Kabinenlagerungssystem in ein Fahrzeug integriert werden. Das System ist an beliebige Kabinenabmessungen anpassbar und ermöglicht eine Verwendung in einem breiten Fahrzeugbereich für unterschiedliche Arbeitsaufgaben.

Das Kabinenlagerungssystem kann wenigstens einen Positionssensor 50 auf einer Kabinenlagerungsseite aufweisen, jedoch ist auch die beidseitige Anbringung des Positionssensor 50 möglich, so dass eine ungleiche Höhe in beiden Seiten der Kabinenlagerung 10 erkannt werden kann.

Besonders im Bereich der Achsen von Fahrzeugen findet ein starker Schmutzeintrag und Aufbau statt. Aufgrund der Kabinenlagerung 10 wird im kritischen Bereich der zueinander beweglichen Bauteile der Schmutzaufbau verhindert. Üblicherweise kann der Schmutzeintrag zu einem Verklemmen der beweglichen Teile, insbesondere der Kabinenlagerung 10 führen, wodurch diese nicht mehr oder nur noch eingeschränkt die Funktion verrichten kann. Darüber hinaus entstehen bei der Bewegung als störend empfundene Geräusche. Durch die erfindungsgemäße Kabinenlagerung 10 und das - system wird die einwandfreie Funktion sichergestellt.

## Patentansprüche

1. Kabinenlagerung aufweisend
eine Chassishalterung (20), aufweisend
eine Chassisplatte (21), ausgelegt zum Befestigen an ein Fahrzeugchassis,
eine an der Chassisplatte (21) befestigte untere Lagerplatte (22) mit einer Öffnung (33), ausgelegt zum Verbinden mit einer oberen Lagerplatte (32),
eine Kabinenhalterung (30), aufweisend
eine Kabinenplatte (31), ausgelegt zum Befestigen an einer Fahrzeugkabine,
eine an der Kabinenplatte (31) befestigte obere Lagerplatte (32) mit einer U-förmigen Struktur, ausgelegt um in der Öffnung (33) der unteren Lagerplatte (22) beweglich gehalten zu werden,
so dass die Chassishalterung (20) und die Kabinenhalterung (30) relativ zueinander bewegbar sind,
**dadurch gekennzeichnet, dass** an einem Übergang der unteren Lagerplatte (22) und der Chassisplatte (21) ein Formelement (40) angebracht ist, das eine zu einem freien Ende der Chassisplatte (21) hin abfallende Form aufweist, so dass auftreffender Schmutz am Formelement (40) abgestreift wird.

2. Kabinenlagerung nach Anspruch 1, **dadurch gekennzeichnet, dass** das Formelement (40) aus Metall oder Kunststoff besteht.

3. Kabinenlagerung nach einem der vorangehenden Ansprüche, **dadurch gekennzeichnet, dass** das Formelement (40) auf einer Seite der unteren Lagerplatte (22) vorgesehen ist.

4. Kabinenlagerung nach einem der vorangehenden Ansprüche, **dadurch gekennzeichnet, dass** das Formelement (40) auf beiden Seiten der unteren Lagerplatte (22) vorgesehen ist.

5. Kabinenlagerung nach einem der vorangehenden Ansprüche, **dadurch gekennzeichnet, dass** zwischen der Kabinenplatte (31) und der Chassisplatte (21) ein hydraulischer Aktuator (70) vorgesehen ist.

6. Kabinenlagerung nach einem der vorangehenden Ansprüche, **dadurch gekennzeichnet, dass** an der unteren Lagerplatte (22) ein Positionssensor (50) vorgesehen ist, der mit einem Gestänge (60) zur Führung der oberen (32) und unteren Lagerplatte (22) zusammenwirkt.

7. Kabinenlagerungssystem aufweisend wenigstens zwei Kabinenlagerungen (10) nach Anspruch 1 bis 6,
wobei zwischen der Kabinenplatte (31) einer Kabinenlagerung (10) und der unteren Lagerplatte (22) der weiteren Kabinenlagerung (10) ein Panhardstab (80) beweglich gehalten ist.

## Claims

1. Cab mounting, having
a chassis holder (20), having
a chassis plate (21), designed for fastening to a vehicle chassis,
a lower bearing plate (22), which is fastened to the chassis plate (21) and has an opening (33), designed for connection to an upper bearing plate (32),
a cab holder (30), having
a cab plate (31), designed for fastening to a vehicle cab,
an upper bearing plate (32), which is fastened to the cab plate (31) and has a U-shaped structure, designed in order to be held movably in the opening (33) of the lower bearing plate (22)
such that the chassis holder (20) and the cab holder (30) are movable relative to each other,
**characterized in that** a shaping element (40) is attached at a transition of the lower bearing plate (22) and the chassis plate (21), the shaping element having a shape sloping towards a free end of the chassis plate (21) such that dirt which occurs is scraped off at the shaping element (40).

2. Cab mounting according to Claim 1, **characterized in that** the shaping element (40) is composed of metal or plastic.

3. Cab mounting according to either of the preceding claims, **characterized in that** the shaping element (40) is provided on one side of the lower bearing plate (22).

4. Cab mounting according to one of the preceding claims, **characterized in that** the shaping element (40) is provided on both sides of the lower bearing plate (22).

5. Cab mounting according to one of the preceding claims, **characterized in that** a hydraulic actuator (70) is provided between the cab plate (31) and the chassis plate (21).

6. Cab mounting according to one of the preceding claims, **characterized in that** a position sensor (50) is provided on the lower bearing plate (22), the position sensor interacting with a linkage (60) for guiding the upper bearing plate (32) and lower bearing plate (22).

7. Cab mounting system having at least two cab mountings (10) according to Claims 1 to 6, wherein a Panhard rod (80) is held movably between the cab plate (31) of a cab mounting (10) and the lower bearing plate (22) of the further cab mounting (10).

## Revendications

1. Support de cabine comportant
une fixation de châssis (20) comportant
une plaque de cabine (21) conçue pour être fixée sur un châssis de véhicule,
une plaque de palier inférieure (22) fixée sur la plaque de châssis (21) avec une ouverture (33), conçue pour être reliée à une plaque de palier supérieure (32),
une fixation de cabine (30) comportant
une plaque de cabine (31) conçue pour être fixée sur une cabine de véhicule,
une plaque de palier supérieure (32) fixée sur la plaque de cabine (31), avec une structure en forme de U conçue pour être maintenue de manière mobile dans l'ouverture (33) de la plaque de palier inférieure (22),
de telle sorte que la fixation de châssis (20) et la fixation de cabine (30) peuvent être déplacées l'une par rapport à l'autre,
**caractérisé en ce qu'**est installé sur une transition de la plaque de palier inférieure (22) et de la plaque de châssis (21) un élément moulé (40), qui présente une forme tombant en direction d'une extrémité libre de la plaque de châssis (21) de manière à enlever la saleté se formant sur l'élément moulé (40).

2. Support de cabine selon la revendication 1, **caractérisé en ce que** l'élément moulé (40) est constitué de métal ou de matière plastique.

3. Support de cabine selon l'une des revendications précédentes, **caractérisé en ce que** l'élément moulé (40) est prévu sur un côté de la plaque de palier inférieure (22).

4. Support de cabine selon l'une des revendications précédentes, **caractérisé en ce que** l'élément moulé (40) est prévu sur les deux côtés de la plaque de palier inférieure (22).

5. Support de cabine selon l'une des revendications précédentes, **caractérisé en ce qu'**un actionneur hydraulique (70) est prévu entre la plaque de cabine (31) et la plaque de châssis (21).

6. Support de cabine selon l'une des revendications précédentes, **caractérisé en ce qu'**est prévu sur la plaque de palier inférieure (22) un capteur de position (50), qui coopère avec une tringlerie (60) pour le guidage de la plaque de palier supérieure (32) et de la plaque de palier inférieure (22).

7. Système de support de cabine comportant au moins deux supports de cabine (10) selon les revendications 1 à 6, une barre Panhard (80) étant maintenue de manière mobile entre la plaque de cabine (31) d'un support de cabine (10) et la plaque de palier inférieure (22) de l'autre support de cabine (10).
